# EUROPÄISCHE PATENTSCHRIFT

(11) **EP 2 658 759 B1**
(45) Veröffentlichungstag und Bekanntmachung des Hinweises auf die Patenterteilung: **19.09.2018**
(21) Anmeldenummer: 11785012.3
(22) Anmeldetag: 18.11.2011
(51) Int. Cl.: B60S 1/40, B60S 1/52

(54) **WISCHBLATTADAPTER, INSBESONDERE FÜR EINE KRAFTFAHRZEUGSCHEIBENWISCHVORRICHTUNG**
WIPER BLADE ADAPTER, IN PARTICULAR FOR A MOTOR VEHICLE WINDSHIELD WIPER DEVICE
ADAPTATEUR DE BALAI D'ESSUIE-GLACE NOTAMMENT DESTINÉ À UN DISPOSITIF D'ESSUIE-GLACE DE VÉHICULE À MOTEUR

(30) Priorität: 27.12.2010 DE 102010064164
(43) Veröffentlichungstag der Anmeldung: 06.11.2013
(73) Patentinhaber: Robert Bosch GmbH, 70442 Stuttgart (DE)
(72) Erfinder: HERINCKX, Dirk, B-3350 Linter (BE); BEX, Koen, B-3890 Jeuk (BE); DEPONDT, Helmut, B-3010 Kessel-Lo (BE)
(86) Internationale Anmeldenummer: PCT/EP2011/070419
(87) Internationale Veröffentlichungsnummer: WO 2012/089407

(56) Entgegenhaltungen:
- EP-A2- 1 099 609
- DE-A1-102005 060 617
- FR-A1- 2 747 090
- FR-A1- 2 754 508
- FR-A1- 2 756 528
- FR-A1- 2 795 695
- FR-A1- 2 902 063
- FR-A1- 2 933 930

## Beschreibung

### Stand der Technik

Aus dem Bereich der Kraftfahrzeugscheibenwischvorrichtungen sind bereits Wischblattadapter bekannt. Die Wischblattadapter sind dazu vorgesehen, ein Wischblatt mit einem Wischarmadapter eines Wischarms zu koppeln.

Ein Wischblattadapater mit den Merkmalen des Oberbegriffs ist beispielsweise aus der EP 1 099 609 A2 bekannt.

### Offenbarung der Erfindung

Die Erfindung geht aus von einem Wischblattadapter, insbesondere für eine Kraftfahrzeugscheibenwischvorrichtung, mit einem Grundkörper.

Es wird vorgeschlagen, dass der Wischblattadapter eine Sprüheinheit aufweist, die am Grundkörper angeordnet und dazu vorgesehen ist, eine Flüssigkeit auf eine Kraftfahrzeugscheibe zu sprühen, wodurch eine besonders gleichmäßige Verteilung der Flüssigkeit auf der Kraftfahrzeugscheibe erreicht werden kann. Unter einer "Sprüheinheit" soll in diesem Zusammenhang insbesondere eine Einheit verstanden werden, die dazu vorgesehen ist, Flüssigkeiten zu Reinigungszwecken auf eine Kraftfahrzeugscheibe zu sprühen. Unter "vorgesehen" soll insbesondere speziell ausgelegt und/oder ausgestattet verstanden werden.

Ferner wird vorgeschlagen, dass die Sprüheinheit vom Grundkörper lösbar ausgebildet ist, wodurch eine einfache Austauschbarkeit der Sprüheinheit erreicht werden kann. Unter "lösbar" soll in diesem Zusammenhang insbesondere "zerstörungsfrei trennbar" verstanden werden. Besonders vorteilhaft ist der Wischblattadapter werkzeuglos lösbar und/oder befestigbar.

Nach der Erfindung, weist der Wischblattadapter zumindest ein Rastmittel auf, das dazu vorgesehen ist, den Grundkörper mit der Sprüheinheit zu verbinden, sodass die Sprüheinheit besonders schnell am Grundkörper montiert werden kann. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden.
In einer weiteren Ausgestaltung der Erfindung wird vorgeschlagen, dass das Rastmittel einstückig mit dem Grundkörper ausgebildet ist, wodurch das Rastmittel besonders kostengünstig hergestellt werden kann. Unter "einstückig" soll insbesondere stoffschlüssig verbunden, wie beispielsweise durch einen Schweißprozess und/oder Klebeprozess usw., und besonders vorteilhaft angeformt verstanden werden, wie durch eine Herstellung aus einem Guss und/oder durch die Herstellung in einem Ein- oder Mehrkomponentenspritzgussverfahren.

Nach der Erfindung, weist der Wischblattadapter zumindest ein erstes Längsführungselement auf, das dazu vorgesehen ist, die Sprüheinheit bei einer Montage zu führen, sodass die Sprüheinheit besonders einfach am Grundkörper montiert werden kann. Unter einem "Längsführungselement" soll dabei in diesem Zusammenhang insbesondere ein Element verstanden werden, das dazu vorgesehen ist, ein Bauteil in eine Längsrichtung zu führen. Bevorzugt ist das Längsführungselement einstückig mit dem Grundkörper des Wischblattadapters ausgebildet. Unter einer "Längsrichtung" soll dabei in diesem Zusammenhang insbesondere eine Richtung verstanden werden, die parallel zu einer Hauptlängserstreckung eines Elements verläuft. Unter einer "Hauptlängserstreckung" soll in diesem Zusammenhang insbesondere eine größtmögliche Erstreckung verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Nach der Erfindung wird vorgeschlagen, dass der Wischblattadapter ein zweites Längsführungselement aufweist, wobei das erste und das zweite Längsführungselement auf zwei gegenüberliegenden Seiten des Grundkörpers angeordnet sind, wodurch zusätzliche Einsatzmöglichkeiten des Wischblattadapters erreicht werden können.

Weist die Sprüheinheit zumindest zwei Sprühöffnungen auf, die dazu vorgesehen sind, die Flüssigkeit in zumindest zwei unterschiedliche Sprührichtungen zu sprühen, kann die Flüssigkeit besonders gut auf der Kraftfahrzeugscheibe verteilt werden.

Eine weitere Verbesserung einer Flüssigkeitsverteilung auf der Kraftfahrzeugscheibe kann erreicht werden, wenn die zumindest zwei Sprührichtungen einen Winkel von zumindest 30° einschließen. Unter einem "Winkel" soll dabei in diesem Zusammenhang insbesondere ein spitzer und/oder ein rechter und/oder ein stumpfer Winkel verstanden werden.

Schließt in zumindest einem Betriebszustand zumindest eine Sprührichtung einen Winkel von zumindest 70° zu der Kraftfahrzeugscheibe ein, kann ein Auftragen einer Flüssigkeit auf die Kraftfahrzeugscheibe besonders präzise erfolgen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Grundkörpers eines Wischblattadapters mit einem Wischblatt,
- Fig. 2: eine perspektivische rückseitige Ansicht des Grundkörpers nach Anspruch 1,
- Fig. 3: eine perspektivische Ansicht einer Sprüheinheit des Wischblattadapters,
- Fig. 4: eine weitere perspektivische Ansicht der Sprüheinheit nach Figur 3,
- Fig. 5: eine Seitenansicht der Sprüheinheit nach Figur 3 und einer Kraftfahrzeugscheibe in einem Betriebszustand,
- Fig. 6: eine perspektivische Ansicht eines ersten Montageschritts des Wischblattadapters nach Figur 1 und
- Fig. 7: eine perspektivische Ansicht des Wischblattadapters nach Figur 1 in einem montierten Zustand.

### Beschreibung des Ausführungsbeispiels

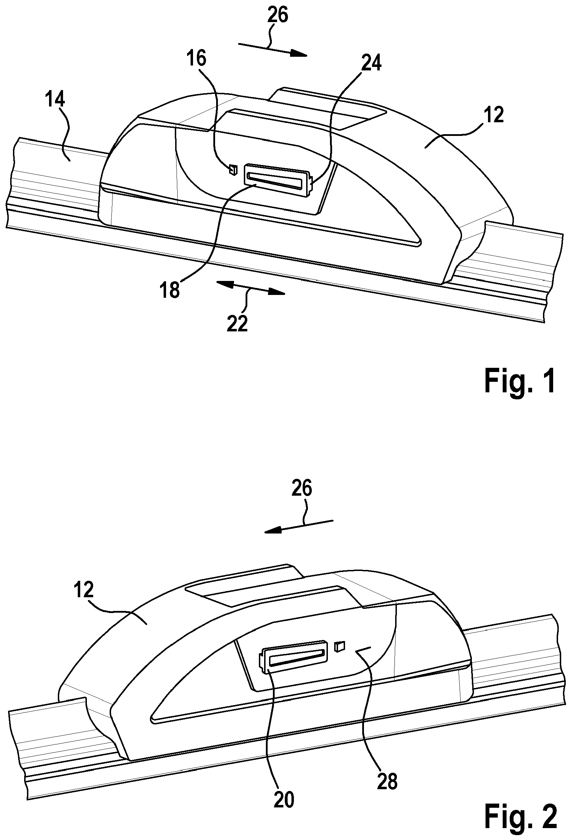

Figur 1 zeigt einen erfindungsgemäßen Grundkörper 12 eines Wischblattadapters für eine Kraftfahrzeugscheibenwischvorrichtung, der mit einem Wischblatt 14 auf eine dem Fachmann geläufige Art und Weise verbunden ist.

Der Wischblattadapter weist ferner ein Rastmittel 16 auf, das am Grundkörper 12 angeordnet ist. Das Rastmittel 16 ist in einem Spritzgussverfahren mit dem Grundkörper 12 hergestellt und daher einstückig mit diesem ausgebildet. Das Rastmittel 16 weist eine widerhakenähnliche Form auf. Ferner lässt sich das Rastmittel 16 elastisch auslenken.

Des Weiteren ist am Grundkörper 12 ein erstes Längsführungselement 18 angeordnet, das sich in seiner Haupterstreckung in eine Längsrichtung 22 erstreckt. Die Längsrichtung 22 verläuft parallel zu einer Hauptlängserstreckung des Grundkörpers 12 des Wischblattadapters. Das Längsführungselement 18 umfasst eine t-förmige Führungsschiene 24. Eine Breite der Führungsschiene 24 verändert sich mit der Längsrichtung 22. Die Breite der Führungsschiene 24 nimmt dabei in eine Montagerichtung 26 stetig linear zu. Die Montagerichtung 26 verläuft parallel zur Längsrichtung 22 und beschreibt eine Richtung, in die eine Sprüheinheit 10 relativ zum Grundkörper 12 bewegt werden muss, um eine formschlüssige Verbindung mit dem Längsführungselement 18 einzugehen.

Der Wischblattadapter weist ein zweites Längsführungselement 20 auf, wobei das erste und das zweite Längsführungselement 18, 20 auf zwei gegenüberliegenden Seiten 27, 28 des Grundkörpers 12 angeordnet sind. Das erste und das zweite Längsführungselement 18, 20 sind spiegelsymmetrisch zueinander ausgebildet. Die Montagerichtung 26 ist bei beiden Längsführungselementen 18, 20 dieselbe. Auf der gegenüberliegenden Seite 28 ist ferner ein zweites Rastmittel 30 angeordnet, das einstückig mit dem Grundkörper 12 ausgebildet ist. Eine Sprüheinheit 10 kann je nach Anwendungsbedarf auf der einen oder der anderen, gegenüberliegenden Seite 28 angebracht werden.

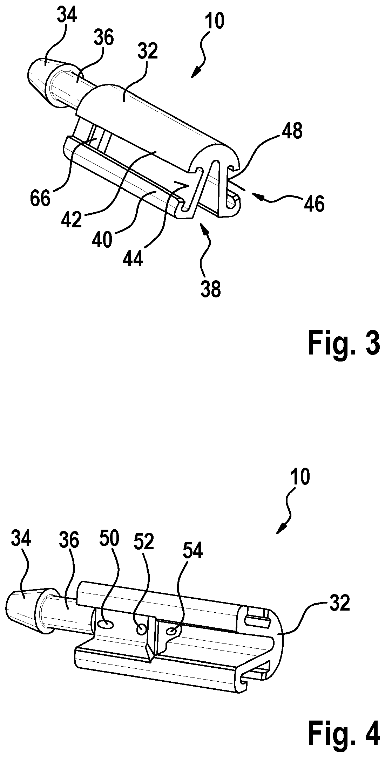

Figur 3 zeigt die erfindungsgemäße Sprüheinheit 10 in einer perspektivischen Ansicht. Die Sprüheinheit 10 ist insbesondere dazu vorgesehen, eine Flüssigkeit auf eine Kraftfahrzeugscheibe 64 zu sprühen. Die Sprüheinheit 10 ist lösbar vom Grundkörper 12 ausgebildet und umfasst einen in einem Spritzgussverfahren hergestellten Sprühkörper 32. Ferner weist die Sprüheinheit 10 ein konisch zulaufendes Anschlusselement 34 auf, das dazu vorgesehen ist, mit einem Schlauch (nicht dargestellt) gekoppelt zu werden, durch den eine Flüssigkeit zur Reinigung der Kraftfahrzeugscheibe durchfließen kann.

Das Anschlusselement 34 ist einstückig über ein Zwischenstück 36 mit dem Sprühkörper 32 ausgebildet. Durch das Anschlusselement 34, das Zwischenstück 36 und den Sprühkörper 32 erstreckt sich ein Flüssigkeitskanal (nicht dargestellt). Die Sprüheinheit 10 weist einen t-förmigen Aufnahmebereich 38 auf, an den zwei Flanken 40, 42 und eine Führungsfläche 44 angrenzen. Die Sprüheinheit 10 ist ferner spiegelsymmetrisch ausgebildet. Daher befindet sich ein zweiter identischer Aufnahmebereich 46 auf einer gegenüberliegenden Seite 48.

Ferner umfasst die Sprüheinheit 10 einen Rastkörper 66, der innerhalb des Aufnahmebereichs 38 angeordnet ist. Der Rastkörper 66 grenzt an die Flanken 40, 42 und an die Führungsfläche 44 an. Der Rastkörper 66 weist eine asymmetrische Keilform auf.

Eine weitere perspektivische Ansicht der Sprüheinheit 10 ist in Figur 4 gezeigt. Eine erste, zweite und dritte Sprühöffnung 50, 52, 54 sind an einer Unterseite des Sprühkörpers 32 angeordnet. Die Sprühöffnungen 50, 52, 54 grenzen an den Flüssigkeitskanal im Sprühkörper 32 an. Die Sprühöffnungen 50, 52, 54 sind hintereinander in einer Linie angeordnet.

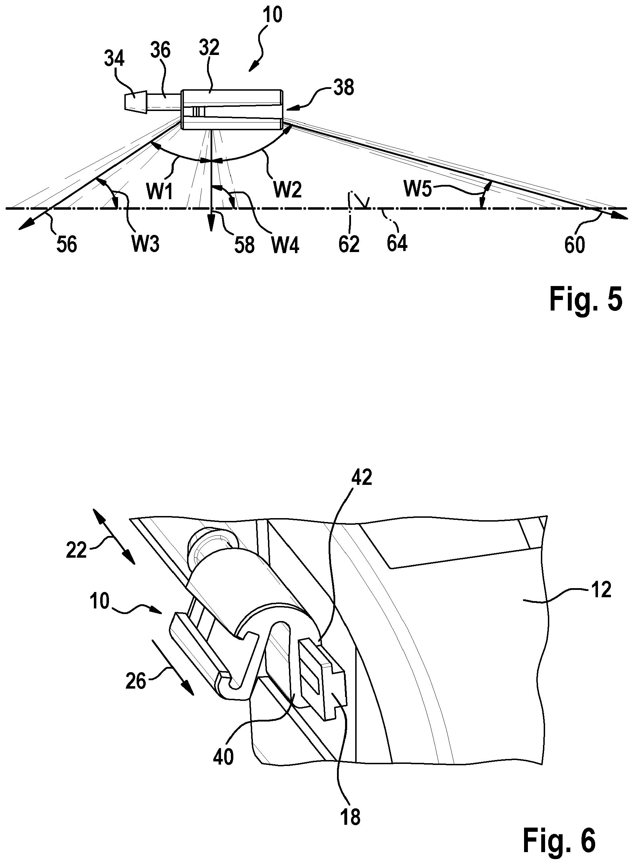

Der Flüssigkeitskanal weist unmittelbar vor den Sprühöffnungen 50, 52, 54 verschiedene Erstreckungsrichtungen auf, die in einem Betriebszustand eine den Sprühkörper 32 durchströmende Flüssigkeit in drei unterschiedliche Sprührichtungen 56, 58, 60 lenken (Figur 5). Die Sprührichtungen 56, 58, 60 zeigen Hauptsprührichtungen, in die die Flüssigkeit wesentlich gelenkt ist. Bei einem Versprühen einer Flüssigkeit kommt es zu einer Abweichung von den Sprührichtungen 56, 58, 60 von jeweils maximal 20°.

Die erste und zweite Sprührichtung 56, 58 schließen dabei einen Winkel W1 von 56° ein. Die zweite und dritte Sprührichtung 58, 60 schließen einen Winkel W2 von 74° ein. In Figur 5 ist ferner schematisch eine Oberfläche 62 der Kraftfahrzeugscheibe 64 gezeigt. Die Oberfläche 62 ist vereinfacht als ebene Fläche gezeigt.

In einem Betriebszustand schließt die erste Sprührichtung 56 mit der Oberfläche 62 einen Winkel W3 von 33° ein. Die zweite Sprührichtung 58 schließt mit der Oberfläche 62 einen Winkel W4 von 90°, also einen rechten Winkel ein. Die dritte Sprührichtung 60 schließt mit der Oberfläche 62 einen Winkel W5 von 16° ein.

In einem ersten Montageschritt (Figur 6) wird die Sprüheinheit 10 auf das Längsführungselement 18 geschoben. Alternativ kann es ebenso auf das zweite Längsführungselement 20 geschoben werden. Das Längsführungselement 18 führt dabei die Sprüheinheit 10 in Montagerichtung 26. Der Sprühkörper 32 bildet in seinem Aufnahmebereich 38 einen Formschluss mit dem Längsführungselement 18. Die Flanken 40, 42 greifen dabei hinter die t-förmige Führungsschiene 24. Die Führungsfläche 44 grenzt an die Führungsschiene 24. Eine Bewegung der Sprüheinheit 10 relativ zum Grundkörper 12 ist lediglich in Längsrichtung 22 möglich.

Durch ein Weiterschieben der Sprüheinheit 10 auf dem Längsführungselement 18 wird das Rastmittel 16 von dem Rastkörper 66 aus einer Ausgangsposition elastisch ausgelenkt. In einem montierten Zustand bewegt sich das Rastmittel 16 elastisch zurück in die Ausgangsposition und liegt formschlüssig am Rastkörper 66 an. Ein Weiterschieben der Sprüheinheit 10 ist wegen der sich in Montagerichtung vergrößernden Breite der Führungsschiene 24 nicht möglich.

Die Führungsschiene 24 bildet im montierten Zustand einen Formschluss im gesamten Aufnahmebereich 38 der Sprüheinheit 10. Eine ungewollte Bewegung der Sprüheinheit 10 relativ zum Grundkörper 12 in Längsrichtung 22 ist durch die veränderte Breite der Führungsschiene 24 und durch das Rastmittel 16 bzw. das Rastmittel 30 nicht möglich.

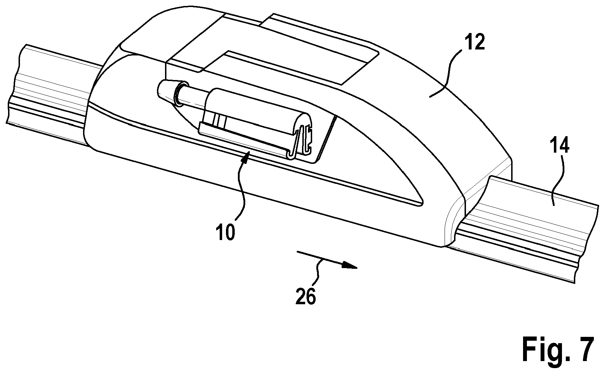

Figur 7 zeigt den Wischblattadapter in einem montierten Zustand. Die Sprüheinheit 10 ist mit dem Grundkörper 12 verbunden. Um die Sprüheinheit 10 wieder vom Grundkörper 12 zu lösen, wird die Sprüheinheit 10 gegen die Montagerichtung 26 gedrückt. Das Rastmittel 16 wird vom Rastkörper 66 der Sprüheinheit 10 aus seiner Ausgangsposition ausgelenkt. Ein Zurückschieben und Lösen der Sprüheinheit 10 ist nun möglich.

## Patentansprüche

1. Wischblattadapter, insbesondere für eine Kraftfahrzeugscheibenwischvorrichtung, mit einem Grundkörper (12), und mit einer Sprüheinheit (10), die am Grundkörper (12) angeordnet und dazu vorgesehen ist, eine Flüssigkeit auf eine Kraftfahrzeugscheibe (64) zu sprühen, mit einem Rastmittel (16), das dazu vorgesehen ist, den Grundkörper (12) mit der Sprüheinheit (10) zu verbinden und mit zumindest einem ersten Längsführungselement (18), das dazu vorgesehen ist, die Sprüheinheit (10) bei einer Montage zu führen, **gekennzeichnet durch** ein zweites Längsführungselement (20), wobei das erste und das zweite Längsführungselement (18, 20) auf zwei gegenüberliegenden Seiten des Grundkörpers (12) angeordnet sind, sodass die Sprüheinheit (10) je nach Anwendungsbedarf auf einen oder den anderen gegenüberliegenden Seite (28) angebracht werden kann.

2. Wischblattadapter nach Anspruch 1, **dadurch gekennzeichnet, dass** die Sprüheinheit (10) vom Grundkörper (12) lösbar ausgebildet ist.

3. Wischblattadapter nach Anspruch 1 oder 2, **dadurch gekennzeichnet, dass** das zumindest eine Rastmittel (16) einstückig mit dem Grundkörper (12) ausgebildet ist.

4. Wischblattadapter nach einem der vorhergehenden Ansprüche, **dadurch gekennzeichnet, dass** die Sprüheinheit (10) zumindest zwei Sprühöffnungen (50, 52, 54) aufweist, die dazu vorgesehen sind, die Flüssigkeit in zumindest zwei unterschiedliche Sprührichtungen (56, 58, 60) zu sprühen

5. Wischblattadapter nach Anspruch 4, **dadurch gekennzeichnet, dass** die zumindest zwei Sprührichtungen (56, 58) einen Winkel (W1) von zumindest 30° einschließen.

6. Wischblattadapter zumindest nach Anspruch 4, **dadurch gekennzeichnet, dass** in zumindest einem Betriebszustand zumindest eine Sprührichtung (58) einen Winkel (W4) von zumindest 70° zu der Kraftfahrzeugscheibe (64) einschließt.

## Claims

1. Wiper blade adapter, in particular for a motor vehicle windshield wiper device, comprising a basic body (12), and comprising a spraying unit (10) which is arranged on the basic body (12) and is provided for spraying a liquid onto a motor vehicle windshield (64), comprising a latching means (16) which is provided for connecting the basic body (12) to the spraying unit (10) and comprising at least one first longitudinal guide element (18) which is_provided for guiding the spraying unit (10) during installation, **characterized by** a second longitudinal guide element (20), wherein the first and the second longitudinal guide elements (18, 20) are arranged on two opposite sides of the basic body (12) such that the spraying unit (10) can be attached on one side or on the other opposite side (28), depending on what is required for use.

2. Wiper blade adapter according to Claim 1, **characterized in that** the spraying unit (10) is designed so as to be detachable from the basic body (12).

3. Wiper blade adapter according to Claim 1 or 2, **characterized in that** the at least one latching means (16) is formed in one piece with the basic body (12).

4. Wiper blade adapter according to one of the preceding claims, **characterized in that** the spraying unit (10) has at least two spraying openings (50, 52, 54) which are provided for spraying the liquid in at least two different spraying directions (56, 58, 60).

5. Wiper blade adapter according to Claim 4, **characterized in that** the at least two spraying directions (56, 58) enclose an angle (W1) of at least 30°.

6. Wiper blade adapter at least according to Claim 4, **characterized in that**, in at least one operating state, at least one spraying direction (58) encloses an angle (W4) of at least 70° with the motor vehicle windshield (64).

## Revendications

1. Adaptateur de balai d'essuie-glace, en particulier pour un dispositif d'essuie-glace de véhicule automobile, avec un corps de base (12) et une unité de pulvérisation (10) qui est disposée sur le corps de base (12) et qui est prévue pour pulvériser un liquide sur une vitre du véhicule automobile (64), avec un moyen d'encliquetage (16) prévu pour connecter le corps de base (12) à l'unité de pulvérisation (10) et avec au moins un premier élément de guidage longitudinal (18) prévu pour guider l'unité de pulvérisation (10) lors d'un montage, **caractérisé par** un deuxième élément de guidage longitudinal (20), le premier et le deuxième élément de guidage longitudinal (18, 20) étant disposés sur deux côtés opposés du corps de base (12) de telle sorte que l'unité de pulvérisation (10) puisse être appliquée selon les besoins d'utilisation sur un côté ou sur l'autre côté opposé (28).

2. Adaptateur de balai d'essuie-glace selon la revendication 1, **caractérisé en ce que** l'unité de pulvérisation (10) est réalisée de manière à pouvoir être détachée du corps de base (12).

3. Adaptateur de balai d'essuie-glace selon la revendication 1 ou 2, **caractérisé en ce qu'**au moins un moyen d'encliquetage (16) est réalisé d'une seule pièce avec le corps de base (12).

4. Adaptateur de balai d'essuie-glace selon l'une quelconque des revendications précédentes, **caractérisé en ce que** l'unité de pulvérisation (10) présente au moins deux ouvertures de pulvérisation (50, 52, 54) qui sont prévues pour pulvériser le liquide dans au moins deux directions de pulvérisation différentes (56, 58, 60) .

5. Adaptateur de balai d'essuie-glace selon la revendication 4, **caractérisé en ce que** les au moins deux directions de pulvérisation (56, 58) forment un angle (W1) d'au moins 30°.

6. Adaptateur de balai d'essuie-glace selon au moins la revendication 4, **caractérisé en ce que** dans au moins un état de fonctionnement, au moins une direction de pulvérisation (58) forme un angle (W4) d'au moins 70° avec la vitre du véhicule (64) .
